# EUROPÄISCHE PATENTSCHRIFT

(11) **EP 2 505 883 B1**
(45) Veröffentlichungstag und Bekanntmachung des Hinweises auf die Patenterteilung: **20.11.2013**
(21) Anmeldenummer: 12154501.6
(22) Anmeldetag: 08.02.2012
(51) Int. Cl.: F16K 15/02, F16L 29/04, F16L 37/34, F16J 15/12

(54) **Kupplungsteil für eine Druckmittel-Leitungskupplung**
coupling element for a pressurized conduit coupling
Elément de raccordement pour un raccord de conduite sous pression

(30) Priorität: 30.03.2011 DE 102011015604
(43) Veröffentlichungstag der Anmeldung: 03.10.2012
(73) Patentinhaber: Voswinkel Entwicklungs- und Verwaltungs-GmbH & Co. KG, 58540 Meinerzhagen (DE)
(72) Erfinder: Hartmann, Jürgen, 58339 Breckerfeld (DE); Firus, Artur, 58638 Iserlohn (DE)
(74) Vertreter: Patentanwälte Dr. Solf & Zapf

(56) Entgegenhaltungen:
- EP-A1- 1 840 442
- DE-A1- 3 904 098
- DE-U- 7 512 494
- DE-U1- 20 019 078
- FR-A1- 2 806 827
- GB-A- 660 657
- US-A1- 2003 205 276

## Beschreibung

Die vorliegende Erfindung betrifft gemäß dem Oberbegriff des Anspruchs 1 eines von zwei Kupplungsteilen einer Druckmittel-Leitungskupplung, wobei das Kupplungsteil mit einem zweiten Kupplungsteil zusammensteckbar ist und ein sich dabei selbsttätig öffnendes Schließventil aufweist, wobei das Schließventil einen in einem Kupplungsgehäuse derart entsprechend einer Kupplungsachse axial beweglich geführten Ventilkörper aufweist, dass dieser beim Kuppelvorgang durch Anlage an dem anderen Kupplungsteil aus einer vorderen Schließstellung selbsttätig gegen eine Schließfederkraft in das Kupplungsgehäuse hinein in eine hintere Öffnungsstellung bewegbar ist, wobei der Ventilkörper in seinem vorderen, in Schließrichtung weisenden Umfangsbereich eine elastische Ringdichtung aufweist, die als Axialdichtung mit einer radialen, eine vordere Gehäuseöffnung umschließenden Dichtfläche des Kupplungsgehäuses zusammenwirkt, wobei die Ringdichtung in einer umfangsgemäßen Dichtungskammer des Ventilkörpers derart angeordnet ist, dass sie in ihrem radial inneren Umfangsbereich von vorne von einem Haltesteg des Ventilkörpers überdeckt ist und in ihrem radial äußeren Umfangsbereich vorne zur axialen Anlage an der Dichtfläche freiliegt, wobei der Ventilkörper in dem die Ringdichtung radial außen umschließenden Bereich einen Anlageabschnitt zur Anlage innerhalb des Ventilgehäuses als mechanischer Endanschlag in der Schließstellung aufweist. In der Schließstellung ist dann durch den mechanischen Endanschlag eine definierte elastische Dichtungsverpressung für die erforderliche Abdichtung gewährleistet.

Bei einer im Handel befindlichen Ausführung eines solchen Kupplungsteils ist der Ventilkörper zweiteilig aus zwei axial hintereinanderliegenden Teilen ausgebildet; er besteht aus einem hinteren Grundkörper und einem scheibenförmigen vorderen Halteteil. Der Grundkörper weist im äußeren Bereich seiner axial nach vorne in Schließrichtung weisenden Stirnfläche eine radial nach vorne offene Ringnut zur Aufnahme der Ringdichtung auf. Das scheibenförmige Halteteil wird nach dem Einsetzen der Ringdichtung in die Ringnut vorne auf den Grundkörper aufgesetzt, wobei er in seinem äußeren Umfangsbereich den die Ringdichtung in ihrem inneren Umfangsbereich überdeckenden Haltesteg aufweist. Das Halteteil wird mittels einer Schraube befestigt, die von der hinteren Seite her durch eine zentrische Öffnung des Grundkörpers in ein Innengewinde des scheibenförmigen Halteteils eingreift. Der den mechanischen Endanschlag bildende Anlageabschnitt ist dabei von einem umfangsgemäßen Ringsteg des Grundkörpers gebildet, wobei sich der mit dem Grundkörper einstückige Ringsteg axial nach vorne erstreckt. Der Ringsteg begrenzt die Dichtungs-Ringnut auf der äußeren Radialseite. Bei dieser bekannten Ausführung des Kupplungsteils hat sich in der Praxis herausgestellt, dass es im geschlossenen Zustand bei hohem inneren Druck des jeweiligen Druckmittels und besonders bei auftretenden Druckpulsationen zu einem Lösen des vorderen Halteteils kommen kann. Dadurch kann in der Folge die druckdichte Abdichtung nicht mehr gewährleistet werden.

Das Dokument DE 75 12 494 U offenbart den Oberbegriff von Anspruch 1 und beschreibt eine Ventilkupplung für Druckleitungen, wobei in einem Gehäuse ein einteiliger Ventilkörper angeordnet ist, der an einer Stirnseite eine Ventildichtung aufweist. Diese Ventildichtung ist in einer im Schnitt trapezförmigen, sich zur offenen Seite hin verengenden Aufnahmekammer des Ventilkörpers angeordnet. In seiner Schließlage liegt dieser bekannte Ventilkörper mit der Ventildichtung sowie aber auch mit den auf beiden Seiten der Dichtung radial angrenzenden Bereichen der Stirnfläche an einer Dichtsitzfläche einer gegenüberliegenden Gehäusewandung an.

Auch das Dokument GB 660 657 A beschreibt einteilige Ventilkörper mit in nutartigen Aufnahmekammern sitzenden Dichtungen.

Der vorliegenden Erfindung liegt die Aufgabe zu Grunde, ein Kupplungsteil der beschriebenen, gattungsgemäßen Art zu schaffen, das für einen erhöhten Druck ausgelegt ist und trotzdem eine erhöhte Betriebssicherheit zur Vermeidung von Störungen und Schäden sowie auch eine einfache Herstellung und Montage gewährleistet.

Erfindungsgemäß wird dies gemäß dem unabhängigen Anspruch 1 dadurch erreicht, dass der Anlageabschnitt von einem separaten, die Ringdichtung umfangsgemäß umschließenden Ringelement gebildet ist. Durch diese Ausgestaltung entfällt somit die frühere Unterteilung des Ventilkörpers in zwei axialhintereinanderliegende Teile und somit auch deren Schraubverbindung. Der Ventilkörper ist weitgehend einteilig ausgebildet, so dass er zur sicheren Abdichtung auch bei hohem Innendruck und auch bei eventuellen Druckpulsationen geeignet ist. Durch die Einteiligkeit des Ventilkörpers mit dem vorderen, radial nach außen ragenden Haltesteg besteht die Dichtungskammer zunächst aus einem radial nach außen offenen Ringnutbereich, in den die Ringdichtung unter elastischer Verformung über den Haltesteg hinweg eingesetzt werden kann. Anschließend wird erfindungsgemäß das separate Ringelement axial von vorne aufgesetzt, bis es mit einer hinteren, in Ventil-Öffnungsrichtung weisenden Stirnfläche auf einer radialen Anlagefläche des Ventilkörpers anliegt und dann die Ringdichtung außen umfangsgemäß umschließt. Durch die feste mechanische Anlage des Ringelementes an dem Ventilkörper kann vorteilhaft es in der Schließstellung die Endanschlagstellung des Ventilkörpers am Kupplungsgehäuse genau definieren. In der so auf einfache Weise zu montierenden Stellung bleibt dann nur noch der radial äußere Umfangsbereich der vorderen Stirndichtfläche der Ringdichtung frei zur dichtenden Anlage an der Dichtfläche des Ventilgehäuses.

Durch die Erfindung kann das erfindungsgemäße Kupplungsteil für einen sehr hohen Innendruck von bis zu 560 bar mit einer mehrfachen Sicherheit für den Berstdruck ausgelegt sein, ohne dass Störungen oder gar Schäden und Undichtigkeiten zu befürchten wären.

Vorteilhafte Ausgestaltungsmerkmale der Erfindung sind in den jeweils abhängigen Ansprüchen sowie auch in der anschließenden Beschreibung enthalten.

Anhand der Zeichnung und darin veranschaulichter, bevorzugter Ausführungsbeispiele soll die Erfindung im Folgenden genauer erläutert werden. Es zeigen:
- Fig. 1: ein erfindungsgemäßes Kupplungsteil in einer halb-axial geschnittenen Seitenansicht,
- Fig. 2: eine stark vergrößerte Ansicht des Teilbereiches X aus Fig. 1,
- Fig. 3: eine gesonderte Perspektivansicht des Ventilkörpers in der Ausführung gemäß Fig. 1 und 2,
- Fig. 4: den Ventilkörper im Axialschnitt entsprechend Fig. 1,
- Fig. 5: eine Ansicht des Ventilkörpers auf dessen Rückseite in Pfeilrichtung V gemäß Fig. 4,
- Fig. 6: eine Seitenansicht des Ventilkörpers in Pfeilrichtung VI gemäß Fig. 5,
- Fig. 7: eine Draufsicht auf die vorderen Stirnseite des Ventilkörpers in Pfeilrichtung VII gemäß Fig. 6,
- Fig. 8: eine überwiegend axial geschnittene Explosionsansicht der Bestandteile des Ventilkörpers,
- Fig. 9: eine gegenüber Fig. 1 vergrößerte halb-axial geschnittene Seitenansicht des erfindungsgemäßen Kupplungsteils in einem mit einem zugehörigen zweiten Kupplungsteil gekuppelten Zustand,

In den verschiedenen Figuren der Zeichnung sind gleiche Teile stets mit den gleichen Bezugszeichen versehen.

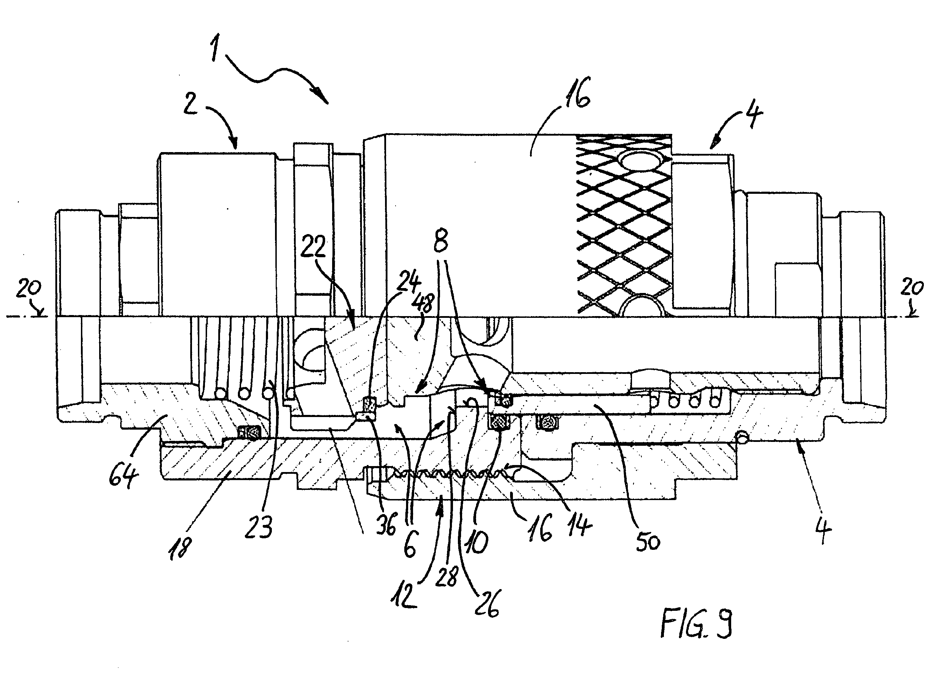

Einleitend sei zunächst auf die Fig. 9 verwiesen, in der eine Druckmittel-Leitungskupplung 1 in einem gekuppelten Zustand dargestellt ist. Diese Leitungskupplung 1 besteht aus zwei zusammensteckbaren Kupplungsteilen 2, 4, die auf ihren voneinander abgewandten Seiten mit nicht dargestellten DruckmittelLeitungen, beispielsweise Rohrleitungen, verbunden bzw. zu verbinden sind, und die jeweils ein federbelastetes Schließventil 6, 8 enthalten, um in einem getrennten, entkuppelten Zustand die jeweils angeschlossene Druckmittel-Leitung selbsttätig druckdicht zu verschließen. Während des Kuppelvorgangs beim Zusammenstecken der Kupplungsteile 2, 4 öffnen sich die Schließventile 6, 8 durch gegenseitige Anlage selbsttätig, um den Durchgang für das jeweilige durch die Leitungen strömende Medium freizugeben.

Die vorliegende Erfindung betrifft nun eines der zwei Kupplungsteile, und zwar insbesondere das als Kupplungsmuffe 2 ausgebildete Kupplungsteil, wobei das andere Kupplungsteil als Kupplungsstecker 4 ausgebildet ist. Der Kupplungsstecker 4 ist bereichsweise in die Kupplungsmuffe 2 einsteckbar, wobei eine umfangsgemäße Abdichtung über eine Dichtung 10 erfolgt. Zudem sind geeignete Verriegelungsmittel 12 zum lösbaren Verriegeln der Kupplungsteile 2, 4 in der steckgekuppelten Kupplungslage vorgesehen. Wie dargestellt sind die Verriegelungsmittel 12 bevorzugt von einem Außengewinde 14 der Kupplungsmuffe 2 und von einer mit einem korrespondierenden Innengewinde auf das Außengewinde 14 aufschraubbaren Überwurfmutter 16 des Kupplungssteckers 4 gebildet.

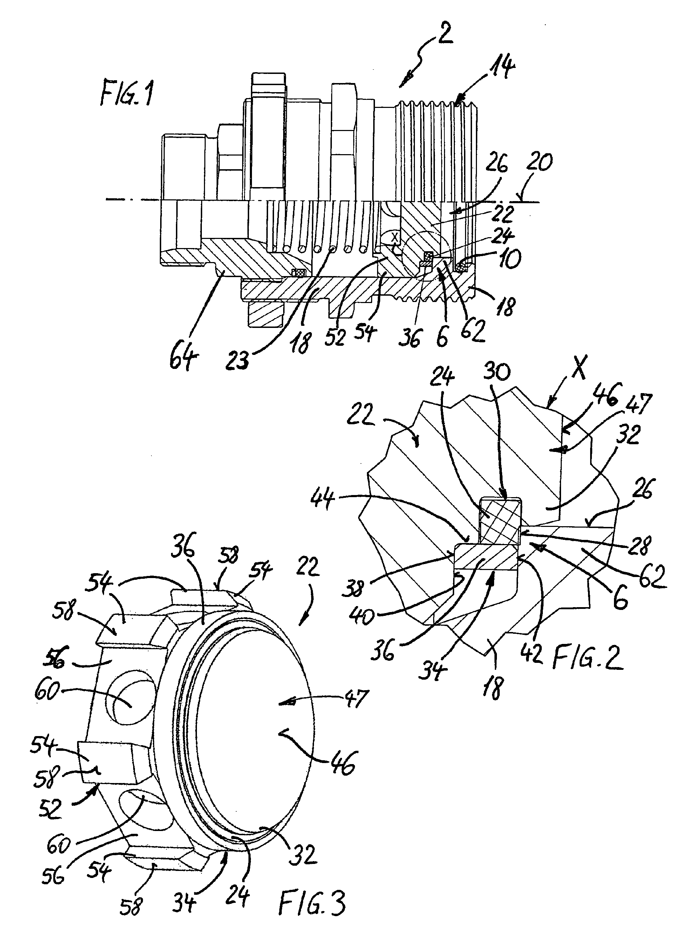

Was nun das erfindungsgemäße Kupplungsteil 2 betrifft, so soll dieses anhand der Fig. 1 bis 8 genauer beschrieben werden. Das Schließventil 6 dieses Kupplungsteils 2 weist einen in einem Kupplungsgehäuse 18 derart entsprechend einer Kupplungsachse 20 axial beweglich geführten, scheibenförmigen Ventilkörper 22 auf, dass dieser beim Kuppelvorgang durch Anlage an dem anderen Kupplungsteil 4 (vgl. Fig. 9) aus einer vorderen Schließstellung (Fig. 1) selbsttätig gegen eine Schließfederkraft nach hinten in das Kupplungsgehäuse 18 hinein in eine Öffnungsstellung (Fig. 9) bewegbar ist. Die Schließfederkraft wird von einerbevorzugt als Schraubendruckfeder ausgebildeten - Schließfeder 23 erzeugt, die axial zwischen dem Ventilkörper 22 und einem Widerlager innerhalb des Kupplungsgehäuses 18 angeordnet ist. Der Ventilkörper 22 weist in seinem vorderen, in Schließrichtung weisenden Umfangsbereich eine elastische Ringdichtung 24 auf. Wie sich besonders aus der vergrößerten Darstellung in Fig. 2 ergibt, wirkt die Ringdichtung 24 als Axialdichtung mit einer radialen, d. h. senkrecht zur Kupplungsachse 20 verlaufenden und eine vordere Gehäuseöffnung 26 umschließenden Dichtfläche 28 des Kupplungsgehäuses 18 zusammen. Dabei ist die Ringdichtung 24 in einer umfangsgemäßen Dichtungskammer 30 des Ventilkörpers 22 derart angeordnet, dass sie in ihrem radial inneren Umfangsbereich von vorne von einem Haltesteg 32 des Ventilkörpers 22 überdeckt ist und in ihrem radial äußeren Umfangsbereich vorne zur Anlage an der Dichtfläche 28 freiliegt. Weiterhin weist der Ventilkörper 22 in dem die Ringdichtung 24 radial außen umschließenden Bereich einen Anlageabschnitt 34 zur Anlage innerhalb des Kupplungsgehäuses 18 als mechanischer Endanschlag in der Schließstellung auf. Auch dazu wird insbesondere auf Fig. 2 verwiesen. Die Ringdichtung 24 überragt hierbei den Anlageabschnitt 34 mit einem axialen Überstand, wobei dieser Überstand derart in Abhängigkeit von dem Ringquerschnitt der Ringdichtung 24, deren elastischen Materialeigenschaften und dem Volumen der Dichtungskammer 30 bemessen ist, dass in der von dem mechanischen Anschlag definierten Ventil-Schließstellung eine die Dichtwirkung gewährleistende, elastische Verpressung der Ringdichtung 24 erreicht wird.

Gemäß Fig. 1 bis 9 ist hierbei vorgesehen, dass der Ventilkörper 22 einstückig mit dem vorderen Haltesteg 32 ausgebildet ist, wobei erfindungsgemäß der Anlageabschnitt 34 von einem ursprünglich separaten, die Ringdichtung 24 umfangsgemäß umschließenden Ringelement 36 gebildet ist.

Wie sich weiterhin besonders aus Fig. 2 ergibt, weist das Ringelement 36 einen rechteckigen, mit seiner längeren Erstreckung axial ausgerichteten Ringquerschnitt auf. Vorzugsweise sind auf beiden Axialseiten im inneren Umfang Anfasungen gebildet (nicht bezeichnet). Weiterhin liegt das Ringelement 36 mit einer hinteren, in Ventil-Öffnungsrichtung weisenden Stirnfläche 38 auf einer radialen, zur Kupplungsachse 20 senkrechten Anlagefläche 40 des Ventilkörpers 22 an. Durch diese feste Anlage kann das Ringelement 36 als mechanischer Endanschlag für den Ventilkörper 22 in der Schließstellung fungieren, indem es mit seiner vorderen Stirnfläche 42 innerhalb des Kupplungsgehäuses 18 im sich außen an die Dichtfläche 28 anschließenden Bereich zur Anlage kommt. In der montierten Stellung gemäß Fig. 2 sitzt das Ringelement 36 bereichsweise auf einem zylindrischen Haltebereich 44 des Ventilkörpers 22 und begrenzt bereichsweise die Dichtungskammer 30 radial nach außen über den gesamten Umfang hinweg. Mit Vorteil kann das Ringelement 36 spielfrei auf dem Haltebereich 44 sitzen, wobei auch eine Presspassung vorgesehen sein kann.

Zweckmäßig bestehen sowohl der Ventilkörper 22 als auch das Ringelement 36 aus Metall, wie Stahl oder Messing.

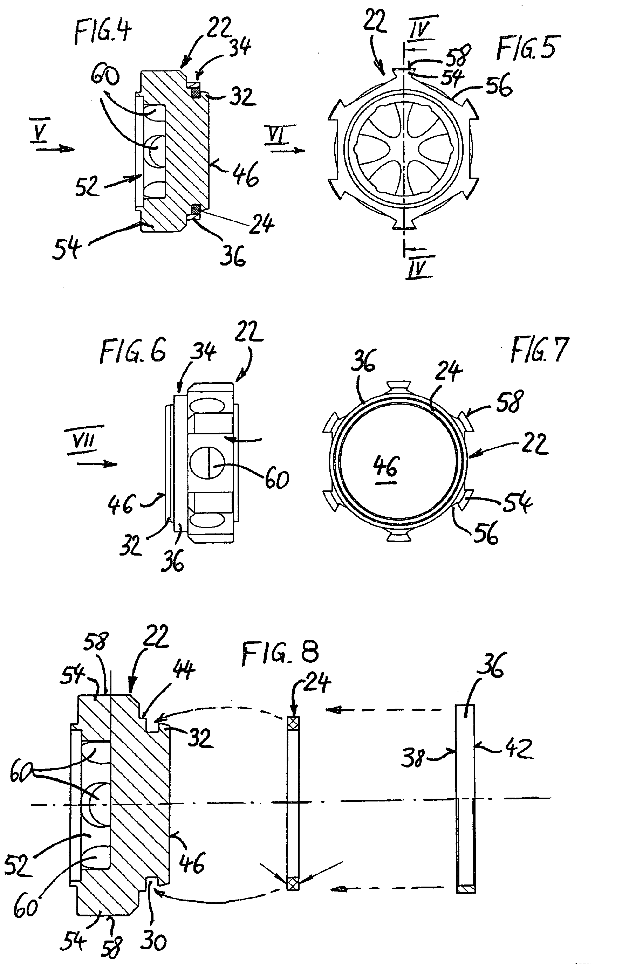

Wie sich aus Fig. 8 ergibt, ist trotz der einstückigen Ausgestaltung des vorderen Haltesteges 32 mit dem übrigen Ventilkörper 22 eine einfache Montage möglich. Dazu braucht lediglich die elastische Ringdichtung 24 in Richtung der gestrichelt eingezeichneten Pfeile über den Haltesteg 32 hinweg in die noch radial nach außen offene Dichtungskammer 30 eingesetzt bzw. eingefädelt zu werden, was durch eine elastische Verformung der Ringdichtung 24 leicht möglich ist. Anschließend wird das Ringelement 36 axial über die Ringdichtung 24 hinweg auf den Haltebereich 44 des Ventilkörpers 22 aufgesetzt.

In weiterer vorteilhafter Ausgestaltung weist der Ventilkörper 22 in seinem von der Ringdichtung 24 umschlossenen Bereich eine durchgehend ebene, zur Kupplungsachse 20 senkrechte, kreisförmige Stirnfläche 46 auf. Diese Stirnfläche 46 ist bevorzugt Teil eines kreisförmigen Vorsprungs 47, der in der Schließstellung etwas in die Gehäuseöffnung 26 eingreift. Dazu kann sich der Vorsprung 47 außen im Bereich des Haltesteges 32 leicht konisch verjüngen (Fig. 2).

Wie sich aus Fig. 9 ergibt, kommt beim Kuppelvorgang ein fester Stößel 48 des anderen Kupplungsteils 4 zur Anlage an der Stirnfläche 46 des Ventilkörpers 22, so dass bei dem weitergehenden Kuppelvorgang der Ventilkörper 22 in das Kupplungsgehäuse 18 hinein in seine Öffnungsstellung verschoben wird. Andererseits wird innerhalb des anderen Kupplungsteils 4 ein hülsenförmiger Ventilkörper 50 durch Anlage an dem Kupplungsgehäuse 18 des Kupplungsteils 2 in das Kupplungsteil 4 hinein in eine Öffnungsstellung verschoben.

Wie sich weiterhin aus den gesonderten Darstellungen in Fig. 3 bis 8 ergibt, weist der scheibenförmige Ventilkörper 22 in seinem sich axial an den Bereich der Dichtungskammer 30 mit der Ringdichtung 24 anschließenden Bereich eine Umfangswandung 52 mit in Umfangsrichtung abwechselnd vorgesehenen Anlageabschnitten 54 und radialen Ausnehmungen 56 auf. Die Anlageabschnitte 54 weisen äußere Führungsflächen 58 zur verschiebbaren Anlage innerhalb des Kupplungsgehäuses 18 auf. Im Bereich der Ausnehmungen 56 sind in der Umfangswandung 52 Strömungsöffnungen 60 vorgesehen, um einen großen wirksamen Strömungsquerschnitt für das jeweilige Druckmittel zu erreichen. In der dargestellten, bevorzugten Ausführungsform sind jeweils sechs Anlageabschnitte 54 und sechs Ausnehmungen 56 mit folglich auch sechs Strömungsöffnungen 60 vorgesehen. Die Führungsflächen 58 der Anlageabschnitte 54 liegen auf einer gemeinsamen, gedachten Zylinderfläche und dadurch innerhalb der entsprechend zylindrischen Innenfläche des Kupplungsgehäuses 18.

Wie sich noch aus Fig. 1 ergibt, ist die in der Schließstellung mit der Ringdichtung 24 des Ventilkörpers 22 zusammenwirkende Dichtfläche 28 vorteilhafterweise an einem einstückig mit dem Kupplungsgehäuse 18 ausgebildeten, radial nach innen ragenden Ringvorsprung 62 gebildet. Da erfindungsgemäß auch der Ventilkörper 22 überwiegend einstückig ausgebildet ist, ist das Kupplungsgehäuse 18 in seinem hinteren, der vorderen Gehäuseöffnung 26 axial gegenüberliegenden Bereich lösbar mit einem eine Montageöffnung verschließenden Anschlussteil 64 verbunden. Auch dieses Merkmal trägt zu einer hohen Druckfestigkeit bei. Die Montage der inneren Bestandteile des Kupplungsteils 2 erfolgt von "hinten" durch die dortige Montageöffnung, die dann mit dem insbesondere einzuschraubenden Anschlussteil 64 verschlossen wird. Hierdurch tritt der weitere Vorteil auf, dass eine einfache Anpassung an unterschiedliche Anschlüsse für verschiedene Druckleitungen möglich ist durch entsprechende Wahl des jeweiligen Anschlussteils 64. Verschiedene Anschlussteile 64 können deshalb nach Art von Adaptern bereitgestellt werden.

## Patentansprüche

1. Kupplungsteil (2) für eine - aus zwei zusammensteckbaren und sich dabei selbsttätig gegenseitig öffnende Schließventile (6, 8) aufweisenden Kupplungsteilen (2, 4) bestehende - Druckmittel-Leitungskupplung (1), wobei das Schließventil (6) einen in einem Kupplungsgehäuse (18) derart entsprechend einer Kupplungsachse (20) axial beweglich geführten Ventilkörper (22) aufweist, dass dieser beim Kuppelvorgang durch Anlage an dem anderen Kupplungsteil (4) aus einer Schließstellung selbsttätig gegen eine Schließfederkraft in das Kupplungsgehäuse (18) hinein in eine Offnungsstellung bewegbar ist, wobei der Ventilkörper (22) in seinem vorderen, in Schließrichtung weisenden Umfangsbereich eine elastische Ringdichtung (24) aufweist, die als Axialdichtung mit einer eine vordere Gehäuseöffnung (26) umschließenden Dichtfläche (28) des Kupplungsgehäuses (18) zusammenwirkt, wobei die Ringdichtung (24) in einer umfangsgemäßen Dichtungskammer (30) des Ventilkörpers (22) derart angeordnet ist, dass sie in ihrem radial inneren Umfangsbereich von vorne von einem Haltesteg (32) des Ventilkörpers (22) überdeckt ist und in ihrem radial äußeren Umfangsbereich vorne zur Anlage an der Dichtfläche (28) freiliegt, wobei der Ventilkörper (22) in dem die Ringdichtung (24) radial außen umschließenden Bereich einen Anlageabschnitt (34) zur Anlage innerhalb des Kupplungsgehäuses (18) als mechanischer Endanschlag in der Schließstellung aufweist, wobei
der Ventilkörper (22) einstückig mit dem vorderen Haltesteg (32) ausgebildet ist, **dadurch gekennzeichnet, dass** der Anlageabschnitt (34) von einem separaten, die Ringdichtung (24) umfangsgemäß umschließenden Ringelement (36) gebildet ist.

2. Kupplungsteil nach Anspruch 1,
**dadurch gekennzeichnet, dass** das Ringelement (36) einen rechteckigen, mit seiner längeren Erstreckung axial ausgerichteten Ringquerschnitt, vorzugsweise mit im inneren Umfang auf beiden Axialseiten gebildeten Anfasungen aufweist.

3. Kupplungsteil nach Anspruch 1 oder 2,
**dadurch gekennzeichnet, dass** das Ringelement (36) mit einer hinteren, in Ventil-Öffnungsrichtung weisenden Stirnfläche (38) auf einer radialen Anlagefläche (40) des Ventilkörpers (22) anliegt.

4. Kupplungsteil nach einem der Ansprüche 1 bis 3,
**dadurch gekennzeichnet, dass** das Ringelement (36) bereichsweise auf einem zylindrischen Haltebereich (44) des Ventilkörpers (22) sitzt und bereichsweise die Dichtungskammer (30) radial nach außen vollumfänglich begrenzt.

5. Kupplungsteil nach einem der Ansprüche 1 bis 4,
**dadurch gekennzeichnet, dass** der Ventilkörper (22) und das Ringelement (36) aus Metall bestehen.

6. Kupplungsteil nach einem der Ansprüche 1 bis 5,
**dadurch gekennzeichnet, dass** der Ventilkörper (22) in seinem von der Ringdichtung (24) umschlossenen Bereich eine durchgehend ebene, zur Kupplungsachse (20) senkrechte Stirnfläche (46) aufweist.

7. Kupplungsteil nach einem der Ansprüche 1 bis 6,
**dadurch gekennzeichnet, dass** der Ventilkörper (22) in seinem sich axial an den Bereich der Dichtungskammer (30) mit der Ringdichtung (24) anschließenden, scheibenförmigen Bereich eine Umfangswandung (52) mit einem Außenumfang mit in Umfangsrichtung abwechselnd vorgesehenen Anlageabschnitten (54) und radialen Ausnehmungen (56) aufweist, wobei die Anlageabschnitte (54) Führungsflächen (58) zur verschiebbaren Anlage innerhalb des Kupplungsgehäuses (18) aufweisen, und wobei im Bereich der Ausnehmungen (56) in der Umfangswandung (52) Strömungsöffnungen (60) vorgesehen sind.

8. Kupplungsteil nach einem der Ansprüche 1 bis 7,
**dadurch gekennzeichnet, dass** die Ringdichtung (24) derart in Abhängigkeit von ihrem Ringquerschnitt und dem Volumen der Dichtungskammer (30) mit einem axialen Überstand den Anlageabschnitt (34) des Ventilkörpers (22) überragt, dass in der Ventil-Schließstellung eine die Dichtwirkung gewährleistende, elastische Verpressung der Ringdichtung (24) erreicht wird.

9. Kupplungsteil nach einem der Ansprüche 1 bis 8,
**gekennzeichnet durch** eine Ausgestaltung als Kupplungsmuffe (2) mit einer Aufnahmeöffnung zum bereichsweisen Einstecken eines zugehörigen Kupplungssteckers (4).

10. Kupplungsteil nach einem der Ansprüche 1 bis 9,
**dadurch gekennzeichnet, dass** die in der Schließstellung mit der Ringdichtung (24) des Ventilkörpers (22) zusammenwirkende Dichtfläche (28) an einem einstückig mit dem Kupplungsgehäuse (18) ausgebildeten, radial nach innen ragenden Ringvorsprung (62) gebildet ist, wobei das Kupplungsgehäuse (18) in seinem hinteren, der vorderen Gehäuseöffnung (26) axial gegenüberliegenden Bereich lösbar mit einem eine Montageöffnung verschließenden Anschlussteil (64) verbunden ist.

11. Kupplungsteil nach einem der Ansprüche 1 bis 10,
**gekennzeichnet durch** Verriegelungsmittel (12) zum lösbaren Verriegeln der Kupplungsteile (2, 4) in der steckgekuppelten Kupplungslage, wobei vorzugsweise die Verriegelungsmittel (12) von einem Außengewinde (14) des Kupplungsgehäuses (18) gebildet sind, wobei auf das Außengewinde (14) eine Überwurfmutter (16) des anderen Kupplungsteils (4) aufschraubbar ist.

## Claims

1. A coupling part (2) for a pressure-medium line coupling (1) which consists of two coupling parts (2, 4) which can be fitted together and in so doing have automatically mutually opening closing valves (6, 8), wherein the closing valve (6) has a valve body (22) which is guided axially movably corresponding to a coupling axis (20) in a coupling casing (18) in such a way that said body upon the coupling operation, by lying in contact with the other coupling part (4), can be moved out of a closed position automatically counter to a closing-spring force into the coupling casing (18) into an opening position, wherein the valve body (22) in its front peripheral region which points in the closing direction has an elastic ring seal (24) which cooperates as an axial seal with a sealing surface (28), surrounding a front housing opening (26), of the coupling casing (18), wherein the ring seal (24) is arranged in a peripheral sealing chamber (30) of the valve body (22) in such a way that in its radially inner peripheral region it is covered over from the front by a holding bar (32) of the valve body (22) and in its radially outer peripheral region at the front is exposed for lying in contact with the sealing surface (28), wherein the valve body (22) in the region which surrounds the ring seal (24) radially on the outside has a contact section (34) for lying in contact within the coupling housing (18) as a mechanical end stop in the closed position, wherein the valve body (22) is formed of one piece with the front holding bar (32), **characterised in that** the contact section (34) is formed by a separate ring element (36) which surrounds the ring seal (24) on the periphery.

2. A coupling part according to Claim 1, **characterised in that** the ring element (36) has a rectangular ring cross-section oriented axially with its longer extent, preferably with chamfering formed in the inner periphery on both axial sides.

3. A coupling part according to Claim 1 or 2, **characterised in that** the ring element (36) lies in contact with a rear end face (38) pointing in the valve opening direction on a radial contact surface (40) of the valve body (22).

4. A coupling part according to one of Claims 1 to 3, **characterised in that** the ring element (36) is seated in regions on a cylindrical holding region (44) of the valve body (22) and in regions limits the sealing chamber (30) radially outwards over its whole extent.

5. A coupling part according to one of Claims 1 to 4, **characterised in that** the valve body (22) and the ring element (36) consist of metal.

6. A coupling part according to one of Claims 1 to 5, **characterised in that** the valve body (22) in its region which is surrounded by the ring seal (24) has a continuously planar end face (46) which is perpendicular to the coupling axis (20).

7. A coupling part according to one of Claims 1 to 6, **characterised in that** the valve body (22) in its disc-shaped region which axially adjoins the region of the sealing chamber (30) with the ring seal (24) has a peripheral wall (52) with an outer periphery with contact sections (54) and radial recesses (56) provided alternately in the peripheral direction, the contact sections (54) having guide surfaces (58) for displaceable contact within the coupling casing (18), and flow openings (60) being provided in the region of the recesses (56) in the peripheral wall (52).

8. A coupling part according to one of Claims 1 to 7, **characterised in that** the ring seal (24), dependent on its ring cross-section and the volume of the sealing chamber (30), projects with an axial projecting length over the contact section (34) of the valve body (22) in such a way that in the valve closing position elastic pressing of the ring seal (24) which ensures the sealing action is achieved.

9. A coupling part according to one of Claims 1 to 8, **characterised by** a configuration as a coupling bush (2) with a receiving opening for the insertion, in regions, of an associated coupling plug (4).

10. A coupling part according to one of Claims 1 to 9, **characterised in that** the sealing surface (28) which in the closed position cooperates with the ring seal (24) of the valve body (22) is formed on a radially inward-projecting annular projection (62) formed of one piece with the coupling casing (18), the coupling casing (18) in its rear region located axially opposite the front housing opening (26) being connected detachably to a connection part (64) which closes a mounting opening.

11. A coupling part according to one of Claims 1 to 10, **characterised by** locking means (12) for detachably locking the coupling parts (2, 4) in the inserted coupled coupling position, with the locking means (12) preferably being formed by an external thread (14) of the coupling casing (18), a cap nut (16) of the other coupling part (4) being able to be screwed onto the external thread (14).

## Revendications

1. Elément de raccordement (2) pour un raccord de conduite sous pression (1) composé de deux éléments de raccordement (2, 4) emboîtables et présentant des soupapes de fermeture (6, 8) s'ouvrant automatiquement réciproquement, la soupape de fermeture (6) présentant un corps de soupape (22) guidé axialement de manière mobile dans un boîtier de raccordement (18) selon un axe de raccordement (20) de telle manière que celui-ci soit automatiquement déplacé, lors du processus de raccordement par appui contre l'autre élément de raccordement (4), d'une position de fermeture contre une force de ressort de fermeture dans le boîtier de raccordement (18) à une position d'ouverture, le corps de soupape (22) présentant, dans sa zone périphérique avant dirigée dans le sens de fermeture, une garniture annulaire (24) élastique qui coagit comme une garniture axiale avec une surface étanche (28) entourant une ouverture de boîtier (26) avant du boîtier de raccordement (18), la garniture annulaire (24) étant disposée dans une chambre de garniture (30) périphérique du corps de soupape (22) de telle manière qu'elle soit recouverte dans sa zone périphérique intérieure radiale par l'avant par une nervure de retenue (32) du corps de soupape (22) et soit dégagée dans sa zone périphérique extérieure radiale vers l'avant pour l'appui contre la surface étanche (28), le corps de soupape (22) présentant, dans la zone entourant radialement à l'extérieur la garniture annulaire (24), une section d'appui (34) pour l'appui dans le boîtier de raccordement (18) comme butée finale mécanique dans la position de fermeture, le corps de soupape (22) étant réalisé d'un seul tenant avec la nervure de retenue avant (32), **caractérisé en ce que** la section d'appui (34) est formée par un élément annulaire (36) séparé entourant sur la périphérie la garniture annulaire (24).

2. Elément de raccordement selon la revendication 1, **caractérisé en ce que** l'élément annulaire (36) présente une section transversale annulaire rectangulaire orientée axialement avec son étendue plus longue, de préférence avec des chanfreins formés dans la périphérie intérieure sur les deux côtés axiaux.

3. Elément de raccordement selon la revendication 1 ou 2, **caractérisé en ce que** la surface frontale (38) arrière dirigée dans le sens d'ouverture de soupape de l'élément annulaire (36) repose sur une surface d'appui radiale (40) du corps de soupape (22).

4. Elément de raccordement selon l'une quelconque des revendications 1 à 3, **caractérisé en ce que** l'élément annulaire (36) loge par endroits sur une zone de retenue (44) cylindrique du corps de soupape (22) et limite par endroits la chambre de garniture (30) sur toute la périphérie radialement vers l'extérieur.

5. Elément de raccordement selon l'une quelconque des revendications 1 à 4, **caractérisé en ce que** le corps de soupape (22) et l'élément annulaire (36) se composent de métal.

6. Elément de raccordement selon l'une quelconque des revendications 1 à 5, **caractérisé en ce que** le corps de soupape (22) présente, dans sa zone entourée de la garniture annulaire (24), une surface frontale (46) plane en continu, perpendiculaire à l'axe de raccordement (20).

7. Elément de raccordement selon l'une quelconque des revendications 1 à 6, **caractérisé en ce que** le corps de soupape (22) présente, dans sa zone en forme de disque contiguë axialement à la zone de la chambre de garniture (30) avec la garniture annulaire (24), une paroi périphérique (52) dotée d'une périphérie extérieure avec des sections d'appui (54) et des évidements radiaux (56) prévus en alternance dans le sens périphérique, les sections d'appui (54) présentant des surfaces de guidage (58) pour l'appui mobile dans le boîtier de raccordement (18), et des ouvertures d'écoulement (60) étant prévues dans la zone des évidements (56) dans la paroi périphérique (52).

8. Elément de raccordement selon l'une quelconque des revendications 1 à 7, **caractérisé en ce que** la garniture annulaire (24) dépasse de la section d'appui (34) du corps de soupape (22) en fonction de sa section transversale annulaire et du volume de la chambre de garniture (30) avec un porte-à-faux axial de telle manière qu'un pressage élastique garantissant l'action étanche de la garniture annulaire (24) soit atteint dans la position de fermeture de soupape.

9. Elément de raccordement selon l'une quelconque des revendications 1 à 8, **caractérisé par** une configuration comme manchon de raccordement (2) avec une ouverture de réception pour l'enfichage par endroits d'une fiche de raccordement (4) afférente.

10. Elément de raccordement selon l'une quelconque des revendications 1 à 9, **caractérisé en ce que** la surface étanche (28) coagissant dans la position de fermeture avec la garniture annulaire (24) du corps de soupape (22) est formée sur une saillie annulaire (62) dépassant radialement vers l'intérieur, réalisée d'un seul tenant avec le boîtier de raccordement (18), le boîtier de raccordement (18) étant relié de manière amovible dans sa zone arrière, opposée axialement à l'ouverture de boîtier avant (26) à une partie de raccordement (64) fermant une ouverture de montage.

11. Elément de raccordement selon l'une quelconque des revendications 1 à 10, **caractérisé par** des moyens de verrouillage (12) pour le verrouillage amovible des éléments de raccordement (2, 4) dans la position de raccordement couplée par enfichage, les moyens de verrouillage (12) étant de préférence formés par un filet extérieur (14) du boîtier de raccordement (18), un écrou-raccord (16) de l'autre élément de raccordement (4) pouvant être vissé sur le filet extérieur (14).
